# EUROPÄISCHE PATENTSCHRIFT

(11) **EP 2 057 086 B1**
(45) Veröffentlichungstag und Bekanntmachung des Hinweises auf die Patenterteilung: **03.10.2012**
(21) Anmeldenummer: 07801788.6
(22) Anmeldetag: 21.08.2007
(51) Int. Cl.: B65G 1/137, B65G 65/00

(54) **VORRICHTUNG UND VERFAHREN ZUM ENTLADEN VON MIT PALETTENLAGEN BELADENEN TABLAREN**
ARRANGEMENT AND METHOD FOR UNLOADING TRAYS WHICH ARE LOADED WITH PALLET LAYERS
PROCÉDÉ ET DISPOSITIF POUR DÉCHARGER DES PLATEAUX CHARGÉS DE COUCHES DE PALETTES

(30) Priorität: 21.08.2006 DE 102006039697
(43) Veröffentlichungstag der Anmeldung: 13.05.2009
(73) Patentinhaber: SSI Schäfer Noell GmbH Lager-und Systemtechnik, 97232 Giebelstadt (DE)
(72) Erfinder: SCHÄFER, Gerhard, 57290 Neunkirchen (DE)
(74) Vertreter: Witte, Weller & Partner
(86) Internationale Anmeldenummer: PCT/EP2007/007352
(87) Internationale Veröffentlichungsnummer: WO 2008/022767

(56) Entgegenhaltungen:
- EP-A- 1 462 394
- US-A- 3 675 801

## Beschreibung

Die vorliegende Erfindung betrifft eine Vorrichtung und ein Verfahren zum Entladen eines Ladehilfsmittels, insbesondere eines Tablars, das zumindest mit einer Verpackungseinheit, vorzugsweise mit einer Palettenlage von Verpackungseinheiten beladen ist.

Eine entsprechende Vorrichtung ist in der EP 1 462 394 A1 offenbart.

Nachfolgend werden unter dem Begriff "Ladehilfsmittel" Träger für Verpackungseinheiten verstanden, wie z.B. Paletten, Behälter, Tablare und Ähnliches. Ladehilfsmittel werden zur Lade- bzw. Lagereinheitenbildung eingesetzt. Hierbei unterscheidet man, abhängig von ihrer Funktion, Ladehilfsmittel mit tragender Funktion, wie z.B. Paletten oder Werkstückträger, tragender und umschließender Funktion, wie z.B. Gitterboxpaletten oder Tablaren, sowie mit tragender, umschließender und abschließender Funktion, wie z.B. Container.

Tablare werden beispielsweise eingesetzt, um Verpackungseinheiten, die in großer Stückzahl auf Paletten in einem Hochregallager gelagert werden, auf geeignete Weise auf die Tablare zu vereinzeln, und diese Tablare dann in ein sog. Tablarlager zu verbringen, wo sie zur Abarbeitung von Kommissionieraufträgen auf Abruf zur Verfügung stehen. In der internationalen Logistik wird eine Verpackungseinheit bei Stückgut auch als "Kollo" (Plural "Kolli"; abgeleitet vom italienischen "collo") bezeichnet. Eine Verpackungseinheit ist eine kleinste Einheit einer Warensendung bzw. eines Kommissionierauftrags. Ein Paket aus zwölf, mit einer Folie miteinander verschweißten Milchtüten stellt beispielsweise eine Verpackungseinheit dar.

Als Stückgut wird in der Logistik alles bezeichnet, was sich am Stück transportieren lässt, beispielsweise Kisten, beladene Paletten, Getränkekisten, Nahrungsmittelchargen, Hauswaren, usw. Kein Stückgut sind beispielsweise Flüssigladung oder Gase, die ohne eigenen Behälter in z.B. ein Transportfahrzeug gepumpt werden. Sand, Kohle, Getreide und vergleichbare Feststoffe sind Massen-, Schütt- oder Sauggut.

Die vorliegende Erfindung ist hauptsächlich auf Stückgüter anwendbar.

EP 1 462 394 A1 offenbart eine Vorrichtung und einen Verfahren die den Oberbegriffen von Ansprüchen 1 und 10 entsprechen. In der Kommissionieranlage werden Paletten aus einem Palettenlager mittels einer Depalettierungseinrichtung auf eine an sich bekannte Art und Weise automatisch mit Greif- und Saugmitteln in einzelne Verpackungseinheiten auf Einzeltablare vereinzelt. Derart vereinzelte Verpackungseinheiten werden anschließend in ein Tablarlager eingelagert, welches als Puffer dient. Diese Tablare sind im Allgemeinen flach und tablettförmig ausgebildet und haben vorzugsweise einen umlaufenden Rand. Die Tablare weisen in ihren Böden Löcher oder Öffnungen auf, die einen Durchgriff einer Hubeinrichtung zum Anheben eines auf dem Tablar gelagerten Artikels erlauben. Hubstifte der Hubeinrichtung ergreifen den Artikel durch die Öffnungen im Tablar von unten und heben den Artikel so aus dem Tablar heraus. Daraufhin ergreift ein Rechen den Artikel und schiebt den Artikel auf eine horizontale Ladeplatte. Die Hubstifte können dann wieder abgesenkt werden, so dass das entleerte Tablar ins Tablarlager zurück befördert werden kann.

Derartige Rechen werden im Stand der Technik auch als Schieber ("Pusher") bezeichnet. Mit einem Pusher lassen sich Abförderbewegungen realisieren. Sobald ein abzuschiebender bzw. abzufördernder Artikel eine vorgesehene Position erreicht hat, wird ein Abschieber, d.h. der Rechen, betätigt, der den Artikel in eine Entladerichtung schiebt.

Um Artikel von einer Förderstrecke abzuschieben, sind auch sog. Dreharm-Sorter bekannt.

Bei den bekannten Rechen, Schiebern bzw. Pushern besteht ein Problem darin, dass ein Tablar immer nur vollständig entladen werden kann. So ist es z.B. nicht möglich, lediglich einzelne Verpackungseinheiten bzw. Artikel vom Tablar zu schieben. Außerdem ist es nicht möglich, nur bestimmte Verpackungseinheiten vom Tablar abzufördern, insbesondere wenn diese bestimmten Verpackungseinheiten von anderen Verpackungseinheiten umgeben sind. Aus diesem Grund werden alle Verpackungseinheiten üblicherweise einzeln auf Einzeltablare gestellt, was wiederum eine hohe Leistungsanforderung an das Lagersystem darstellt.

Das Dokument US 3, 675, 801 A offenbart ein Rollenfeld mit angetriebenen Rollen.

Es ist daher eine Aufgabe der vorliegenden Erfindung, eine verbesserte Vorrichtung und ein verbessertes Verfahren zum Entladen von Ladehilfsmitteln, wie z.B. Tablaren, bereitzustellen.

Diese Aufgabe wird durch eine Vorrichtung gemäβ Anspruch 1 gelöst. Das Rollenfeld umfasst eine Vielzahl von angetriebenen Rollen und hat eine Größe, die im Wesentlichen einer Größe einer Ladefläche des Ladehilfsmittels entspricht. Der Hubmechanismus kann das Rollenfeld anheben oder das Ladehilfsmittel absenken, so dass die Rollen durch Löcher in der Ladefläche des Ladehilfsmittels treten, um eine Verpackungseinheit durch Antreiben der Rollen von der Ladefläche zu fördem. Jede einzelne Rolle des Rollenfeldes ist unabhängig von den restlichen Rollen des Rollenfeldes austeuerbar.

Ferner wird diese Aufgabe gemäß der vorliegenden Erfindung mit einem Verfahren zum Entladen eines Ladehilfsmittels gelöst, wobei das Verfahren die folgenden Schritte aufweist: Verbringen des Ladehilfsmittels über ein Rollenfeld, das eine Vielzahl von angetriebenen Rollen umfasst, wobei jede Rolle des Rollenfeldes unabhängig von den restlichen Rollen des Rollenfeldes ansteuerbar ist, ; Betätigen eines Hubmechanismus, der das Rollenfeld derart anhebt oder der das Ladehilfsmittel derart absenkt, dass die Rollen durch Löcher in einer Ladefläche des Ladehilfsmittels treten, so dass eine Verpackungseinheit, die auf der Ladefläche angeordnet ist, durch Antreiben der Rollen von der Ladefläche gefördert werden kann; und Antreiben der Rollen, um die Verpackungseinheit des Verpackungseinheiten, insbesondere seitlich, von der Ladefläche zu fördern gemäβ Anspruch 10.

Die vorliegende Erfindung hat den Vorteil, dass bestimmte Verpackungseinheiten auf einem Ladehilfsmittel, wie z.B. einem Tablar, gezielt abgefördert bzw. entladen werden können. Dazu ist es nicht erforderlich, einen bekannten Schieber zu unterteilen. Es werden vielmehr angetriebene Rollen vorgesehen, die vorzugsweise auch einzelansteuerbar sind.

Beim Abfördern der Verpackungseinheiten kommt es lediglich zu einem Kontakt zwischen den Rollen und dem Boden der Verpackungseinheiten. Im Gegensatz zum Stand der Technik erfolgt kein zusätzlicher Kontakt mit einer der Seiten der Verpackungseinheit. Dies ist insbesondere dann von Interesse, wenn schlecht handhabbare Verpackungseinheiten abgefördert werden müssen, die in der Fachsprache auch als "Ugly-Güter" oder "non-conveyable" bezeichnet werden. Exemplarisch sei hier eine in Zellophanpapier verpackte Speise genannt, die bei einem seitlichen Abschieben, wie es im Stand der Technik praktiziert wird, verdrückt und somit ihre Form verlieren würde.

Gemäß der vorliegenden Erfindung ist zum Abfördern kein Kontakt mit einer Seite erforderlich. Der Boden der Verpackungseinheiten wird beim Abfördern ebenfalls nicht beschädigt, da er über die Lauffläche der Rollen abrollt und nicht wie im Stand der Technik durch Hubstifte beschädigt werden kann. Dies ist von großem Vorteil, wenn die Verpackungseinheiten sehr schwer sind.

Die zum Abfördern erforderliche Kraft kann direkt an jede einzelne Verpackungseinheit geleitet werden. Diese Maßnahme verringert wiederum das Risiko von Beschädigungen, da die Krafteinleitung nicht wie im Stand der Technik nur über einzelne Verpackungseinheiten erfolgt, nämlich solche, die im direkten Kontakt mit dem Schieber stehen.

Ein weiterer Vorteil von angetriebenen Rollen ist, dass diese auch reversibel genutzt werden können. Dies bedeutet, dass mit Rollen in entgegengesetzten Richtungen abgefördert werden kann, was mit einem Schieber ebenfalls nicht möglich ist.

Ein weiterer Vorteil der Erfindung ist, dass Tablare automatisiert entladen werden können. Dies ist insbesondere bei Tablaren von Vorteil, die eine Ladefläche aufweisen, die so groß wie eine Ladefläche einer Palette ist. Ein Standardmaß hier stellt die sog. Europalette dar, die Abmessungen von 1200 x 800 mm hat. Beim Entladen von so großen Tablaren waren üblicherweise aufwendige Maßnahmen erforderlich, um einen manuellen Arbeitsplatz gemäß ergonomischen Vorschriften zu gestalten.

Auch spielen das Gewicht und die Abmessung der Verpackungseinheit beim Entladen keine Rolle mehr, die jedoch bei einem manuellen Entladen mitunter zu erheblichen Problemen hätte führen können.

Gemäß einer bevorzugten Ausführung ist ferner eine Steuereinrichtung vorgesehen, um bestimmte Rollen des Rollenfelds gezielt ansteuern zu können, wobei vorzugsweise jede einzelne Rolle des Rollenfelds unabhängig von den restlichen Rollen des Rollenfelds ansteuerbar ist. Alternativ könnte das Rollenfeld in eine Vielzahl von Segmenten unterteilbar sein, wobei die Segmente ebenfalls unabhängig voneinander ansteuerbar wären.

Durch diese Maßnahmen ist gewährleistet, dass nur bestimmte Verpackungseinheiten gezielt von dem Tablar abgefördert werden. Dabei werden immer nur solche Rollen angetrieben, die auch tatsächlich zur Abförderung benötigt werden, was in einer Einsparung von Energie resultiert. Um bestimmte Verpackungseinheiten abzufördern, müssen nicht weitere Verpackungseinheiten bewegt werden, wie es bei den bekannten Schiebern der Fall ist.

Gemäß einer weiteren vorteilhaften Ausführungsform hat der Hubmechanismus einen Hub, der es ermöglicht, die Packungseinheit so hoch von der Ladefläche anzuheben, dass die Verpackungseinheit über einen, vorzugsweise vollständig, umlaufenden Begrenzungsrand des Ladehilfsmittels gefördert werden kann.

Durch diese Maßnahme ist gewährleistet, dass die Verpackungseinheit nicht am Rand des Tablars hängen bleibt und so einen Stau, und schlimmstenfalls eine Beschädigung, hervorruft.

Weiter ist es von Vorteil, wenn die Rollen des Rollenfelds matrixförmig angeordnet sind.

Eine Matrix besteht aus Zeilen und Spalten. Die Rollen sind dann an Orten vorgesehen, die Schnittpunkte der Zeilen und Spalten darstellen. In Abhängigkeit von der Größe der abzufördernden Verpackungseinheiten kann eine Entfernung zwischen Matrixpunkten bestimmt werden, so dass auch sehr kleine Verpackungseinheiten individuell von dem Tablar abgefördert werden können.

Insbesondere ist das Rollenfeld in zwei Gruppen unterteilt, wobei die Rollen jeder Gruppe matrixförmig angeordnet sind und die Matrizen der Gruppe gegeneinander versetzt sind.

Werden die Rollen des Rollenfelds auf diese Art angeordnet, so ist immer gewährleistet, dass Verpackungseinheiten abgefördert werden können, selbst wenn sie sehr klein sind und gegenüber einer Soll-Position verrutscht oder verdreht sind.

Gemäß einer weiteren bevorzugten Ausführungsform ist jede Rolle eine Flachmotorrolle, die jeweils einen Rollenkörper mit einem integrierten Antriebsmotor umfasst.

Ein integrierter Antriebsmotor ist vor allem platzsparend. Ferner kann jede Rolle individuell angetrieben werden. Der aus dem Stand der Technik bekannte Antrieb von Rollenreihen hat, im Gegensatz zur vorliegenden Erfindung, lediglich ein Antreiben von vielen Rollen zugelassen.

Vorzugsweise ist jeder Rollenkörper zylinderförmig ausgebildet und weist einen Durchmesser von 6 bis 90 mm auf, wobei der Antriebsmotor eine Leistung von bis zu 90 Watt haben kann.

Die bei der Erfindung verwendete Rolle baut also sehr klein. Dadurch ist es möglich, eine Vielzahl von Rollen auf engstem Raume zu positionieren. Je mehr Rollen verwendet werden, desto genauer können die Verpackungseinheiten gelenkt werden. Dies bedeutet, dass die Verpackungseinheiten bzw. deren Boden sehr klein sein darf.

Weiter ist es von Vorteil, wenn zusätzlich eine Einrichtung zum Erfassen einer geometrischen Anordnung von auf der Ladefläche befindlichen Verpackungseinheiten vorgesehen ist.

Auf diese Weise kann immer festgestellt werden, ob sich die Verpackungseinheiten an ihren Soll-Positionen befinden. Dies ist nicht immer der Fall. Während des Transports des Tablars kann es zu einem Verrutschen der Verpackungseinheiten darauf kommen, insbesondere dann, wenn das Tablar nicht mehr voll beladen ist. Die Tablare werden während des Transports großen Beschleunigungen und Geschwindigkeiten ausgesetzt, so dass die Trägheit der Masse der Verpackungseinheiten dazu führen kann, dass diese während des Transports des Talars auf dem Tablar verrutschen. Somit können die Ist-Positionen von den Soll-Positionen der auf dem Tablar befindlichen Verpackungseinheiten abweichen.

Damit gewährleistet werden kann, dass die richtige Anzahl von Verpackungseinheiten bzw. - bei nicht artikelreiner Beladung des Tablars - dass die richtige Verpackungseinheit abgefördert wird, wird eine "Momentaufnahme" des Beladungszustands des Tablars erzeugt und an eine übergeordnete Steuereinrichtung, wie z.B. einen Lagerverwaltungsrechner, zur weiteren Auswertung übermittelt.

Vorzugsweise handelt es sich bei der Einrichtung zum Erfassen einer geometrischen Anordnung um ein Lichtgitter, einen ortsauflösenden Strichcode-Scanner, eine Videokamera oder eine Fotokamera.

Die vorliegende Erfindung ist von besonderem Vorteil, wenn sie bei einem Lastaufnahmemittel einer Lagermaschine einer Kommissionieranlage verwendet wird. Bei der Lagermaschine kann es sich um einen vertikal verfahrbaren Lift oder Ähnliches handeln.

Wird die Entladevorrichtung der vorliegenden Erfindung bei einem vertikalen Lift eingesetzt, so ist es nicht mehr erforderlich, dass der Lift das Tablar zum Entladen abgibt, d.h. dass das Lastaufnahmemittel das zu entladende Tablar auslädt und übergibt. Die auf dem Tablar - im Lift - befindlichen Verpackungseinheiten können direkt aus dem Lift entladen werden.

Dies stellt eine erhebliche Zeiteinsparung dar, die sich wiederum in einer Erhöhung von bei dem Lift möglichen Wechselspielen niederschlägt.

Dauert der Vorgang eines Entladens eines Tablars aus den Lift beispielsweise 4,5 Sekunden, da das palettengroße Tablar ausgeladen werden muss, so dauert die Abförderung einer Reihe von Artikeleinheiten direkt aus dem Lift, d.h. ohne Tablarauslagerung, lediglich nur noch 3 Sekunden. Man spart also hier 1,5 Sekunden. Ferner spart man sich die Zeit von weiteren 4,5 Sekunden, die erforderlich wäre, um das Tablar wiederum in den Lift einzuladen.

Es versteht sich, dass dieser zeitliche Vorteil nicht nur an einem Übergabepunkt vom Lift zur Fördertechnik oder Ähnlichem gegeben ist, sondern an jedem Übergabepunkt innerhalb eines Kommissioniersystems erzielt werden kann.

Bei einer bevorzugten Ausführungsform des Verfahrens werden lediglich solche Rollen des Rollenfelds angetrieben, die unterhalb der zu fördernden Verpackungseinheit und entlang eines Wegs angeordnet sind, der während eines Abförderns der Verpackungseinheit von der Ladefläche durch die Verpackungseinheit selbst zurückgelegt wird.

Dies resultiert in einer erheblichen Energieeinsparung und ist bedeutend effizienter.

Ferner ist es bevorzugt, wenn eine geometrische Anordnung von Verpackungseinheiten, die sich auf der Ladefläche befinden, erfasst und ausgewertet wird, um zu bestimmen, welche der Rollen angetrieben werden müssen, um die Verpackungseinheit von der Ladefläche zu fördern.

Insbesondere werden nur solche Rollen angehoben, die zum Abfördern der Verpackungseinheit benötigt werden.

Außerdem ist es von Vorteil, wenn jede Rolle des Rollenfelds um eine Achse senkrecht zur Ladefläche drehbar ist, um die Verpackungseinheit in eine andere Richtung zu fördern.

Mit dieser Maßnahme wird gewährleistet, dass Verpackungseinheiten z.B. aus einem mittleren Bereich der Ladefläche abgefördert werden können, obwohl eigentlich weitere Verpackungseinheiten einen direkten Abförderweg versperren.

Außerdem können die Rollen des Rollenfelds selbst unterschiedlich hoch angehoben werden, um z.B. eine schräge Ebene zu definieren, die vorzugsweise in eine Richtung geneigt ist, in die die Verpackungseinheit abgefördert werden soll.

Bei dieser Ausgestaltung nutzt man zusätzlich die Gravitationskraft, um die Verpackungseinheit abzufördern, was mitunter in einer Energieeinsparung resultiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
- Fig. 1: zeigt eine Kommissionieranlage;
- Fig. 2: zeigt eine Depalettiereinrichtung;
- Fig. 3: zeigt einen Kommissionier- und Packplatz, bei dem die vorliegende Erfindung eingesetzt werden kann;
- Fig. 4a: zeigt eine schematische, perspektivische Ansicht eines Tablars;
- Fig. 4b: zeigt ein Rollenfeld gemäß der vorliegenden Erfindung;
- Fig. 4c: zeigt das Tablar der Fig. 4a und das Rollenfeld der Fig. 4b in einem abgehobenen Zustand;
- Fig. 4d: zeigt die Konfiguration der Fig. 4c im abgesenkten Zustand;
- Fig. 4e: zeigt eine Entladevorrichtung gemäß der vorliegenden Erfindung;
- Fig. 4f: zeigt eine Detailansicht der Fig. 4e;
- Fig. 5a bis 5d: zeigen einen Entladevorgang gemäß der vorliegenden Erfindung mit einer Entladevorrichtung gemäß der vorliegenden Erfindung;
- Fig. 5e: zeigt eine Seitenansicht einer weiteren Ausführungsform einer Entladevorrichtung gemäß der vorliegenden Erfindung;
- Fig. 6: zeigt ein Flussdiagramm zur Veranschaulichung eines Entladevorgangs gemäß der vorliegenden Erfindung;
- Fig. 7a bis 7h: zeigt eine Entladevorrichtung gemäß der vorliegenden Erfindung in schematischer Draufsicht, wobei Verpackungseinheiten in verschiedenen Schritten (a bis h) gezielt abgefördert werden; und
- Fig. 8: zeigt einen vertikalen Lift, wie er in der Fig. 1 eingesetzt wird, der eine Entladevorrichtung gemäß der vorliegenden Erfindung integriert hat.

In der nachfolgenden Figurenbeschreibung werden gleiche Elemente mit den gleichen Bezugsziffern bezeichnet werden.

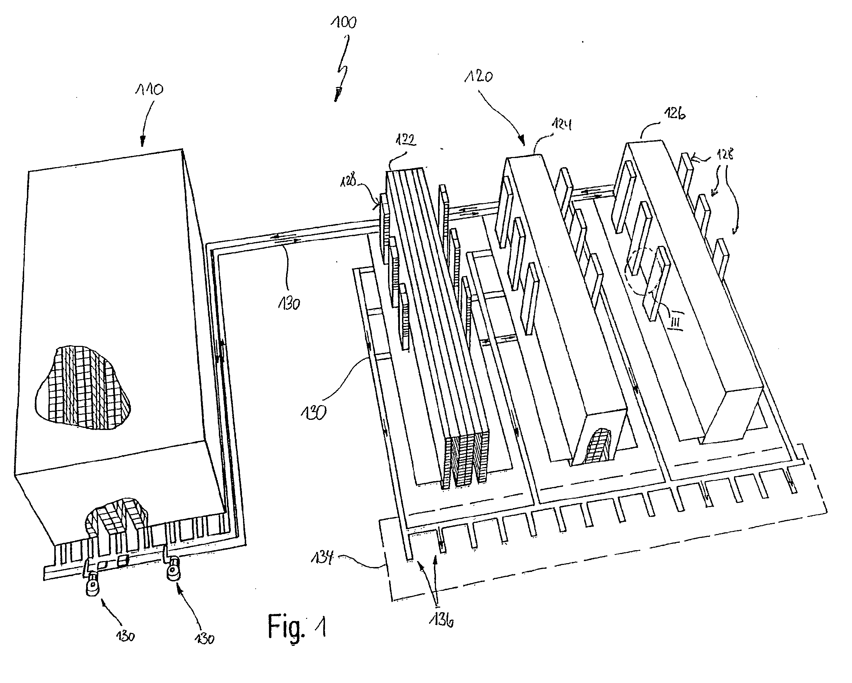

Die vorliegende Erfindung betrifft eine Vorrichtung und ein Verfahren zum Entladen von Ladehilfsmitteln, die mit Verpackungseinheiten beladen sind. Die vorliegende Erfindung lässt sich besonders gut in einem Kommissioniersystem verwirklichen, welches exemplarisch nachfolgend unter Bezugnahme auf die Fig. 1 bis 3 näher erläutert werden wird. In einem solchen Kommissioniersystem werden Tablare mit vorzugsweise jeweils einer Palettenlage beladen und in ein Tablarlager verbracht. Um Kommissionieraufträge abarbeiten zu können, werden die eingelagerten Tablare aus dem Tablarlager gefördert, und eine entsprechende Anzahl von Verpackungseinheiten wird gemäß dem Kommissionierauftrag vom Tablar entnommen. Diese Art einer Kommissionierung unter Verwendung von mit einer Palettenlage beladenen Tablaren ist in der deutschen Anmeldung DE 10 2006 025 618 A offenbart, auf die hier Bezug genommen wird. Ein besonderer Aufbau eines entsprechenden Kommissioniersystems ist in der deutschen Patentanmeldung DE 10 2006 025 620 A offenbart, auf die ebenfalls Bezug genommen wird. Eine Regal-integrierte Packstation, bei der die vorliegende Erfindung besonders gut verwendbar ist, ist in der deutschen Anmeldung DE 10 2006 025 619 offenbart, auf die wiederum Bezug genommen wird. Es sei bemerkt, dass alle Anmeldungen auf den Erfinder der vorliegenden Erfindung zurückgehen.

In Fig. 1 ist eine Kommissionieranlage 100 gezeigt, die ein Hochregallager für Paletten, insbesondere Europaletten, und ein Tablarlager 120 umfasst. Das Tablarlager 120 umfasst hier wiederum drei Regalblöcke 122, 124 und 126, die zur Einlagerung von Tablaren (nicht dargestellt) dienen, die wiederum jeweils mit einer Palettenlage beladen sind. Die Regalblöcke 122, 124 und 126 sind an eine Vielzahl von seitlichen Vertikalliften 128 gekoppelt, die zum Ein- und Auslagern der Tablare verwendet werden.

Aus dem Hochregallager 110 kommende Paletten (nicht dargestellt) werden Depalettiermaschinen 130 zugeführt, die die Paletten lagenweise auf Tablare umladen. Leere und beladene Tablare sowie andere Ladehilfsmittel werden unter Verwendung einer Fördertechnik 130, wie z.B. Rollenbahnen, Gurtbändern, etc. zwischen den einzelnen Elementen der Kommissionieranlage 100 transportiert.

Die Kommissionieranlage 100 umfasst neben dem Hochregallager 110 ferner einen Versandbereich 134, der in Fig. 1 mit einer gestrichelten Linie umrandet ist und der eine Vielzahl von Versandstationen 136 aufweist.

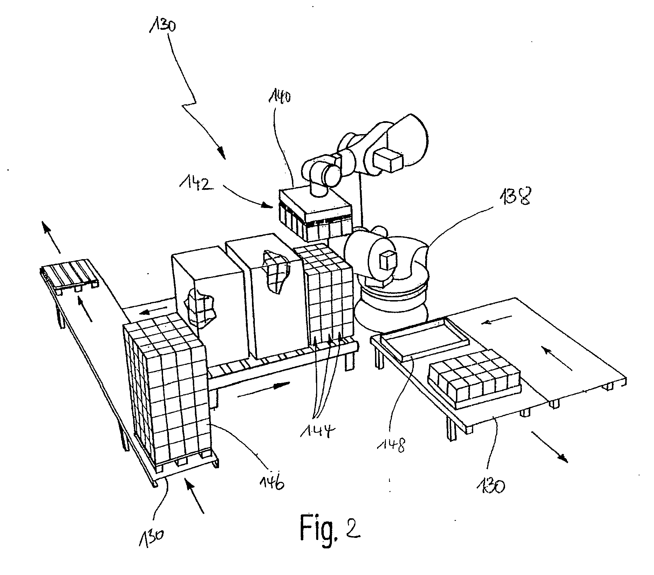

Bezug nehmend auf Fig. 2 ist eine Depalettiermaschine 130 der Fig. 1 detaillierter gezeigt.

Die Depalettiermaschine 130 umfasst einen Depalettierroboter 138, der mit seinem Greifarm beispielsweise unter Verwendung einer Saugvorrichtung Palettenlagen 142, die aus mehreren Verpackungseinheiten 144 bestehen, von beladenen Paletten 146 auf leere Tablare 148 umlädt. Sowohl die Paletten 146 (vollbeladen und/oder teilweise beladen) als auch die Tablare 148 werden mit Hilfe der Fördertechnik 130 von und zu den jeweiligen Orten, insbesondere das Tablarlager, in der Kommissionieranlage 100 transportiert. Dieser Transport ist in der Fig. 2 durch Pfeile schematisch veranschaulicht.

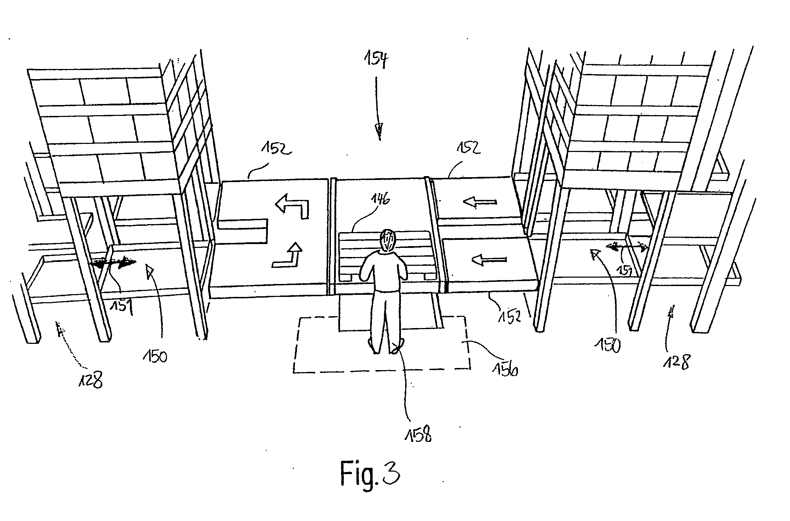

Bezug nehmend auf Fig. 3 ist ein Regal-integrierter Kommissionierplatz schematisch dargestellt, der in Fig. 1 beispielsweise in einem mit III bezeichneten Kreis angeordnet ist und gemäß der oben erwähnten Patentanmeldung aufgebaut ist.

Links und rechts außen sind in der Fig. 3 seitliche Lifte 128 dargestellt. Seitlich an die Lifte angrenzend sind Entladezonen 150 dargestellt, die bisher benötigt wurden, um (manuell) aus dem Lift kommende Tablare aufzunehmen und an eine Fördertechnik 152 weiterzuleiten, damit an einer Packstation 154 Verpackungseinheiten innerhalb eines Arbeitsbereichs 156 von einem Kommissionierer (Packer) entnommen und auf eine Palette 146 gepackt werden können. Die Packstation 154 ist dabei zwischen zwei seitlichen Liften angeordnet.

Wie es nachfolgend noch ausführlich beschrieben werden wird, wird nun gemäß der vorliegenden Erfindung das Tablar nicht mehr aus dem Lift 128 ausgeladen, sondern lediglich die auf dem Tablar befindlichen Verpackungseinheiten werden vom Tablar entladen, welches wiederum im Lift 128 verbleibt. Die entladenen Verpackungseinheiten können dann beispielsweise über die Fördertechnik 152 zum Kommissionierer 158 transportiert werden. Der Kommissionierer 158 muss also nicht mehr das Tablar manuell entladen, was mitunter aufgrund der großen möglichen Dimensionen (1200 x 800 mm) sehr anstrengend bis zu unmöglich war. Unter Zuhilfenahme der vorliegenden Erfindung können die Verpackungseinheiten nunmehr automatisiert entladen werden, was zum einen ergonomisch günstiger und zum anderen auch erheblich schneller ist.

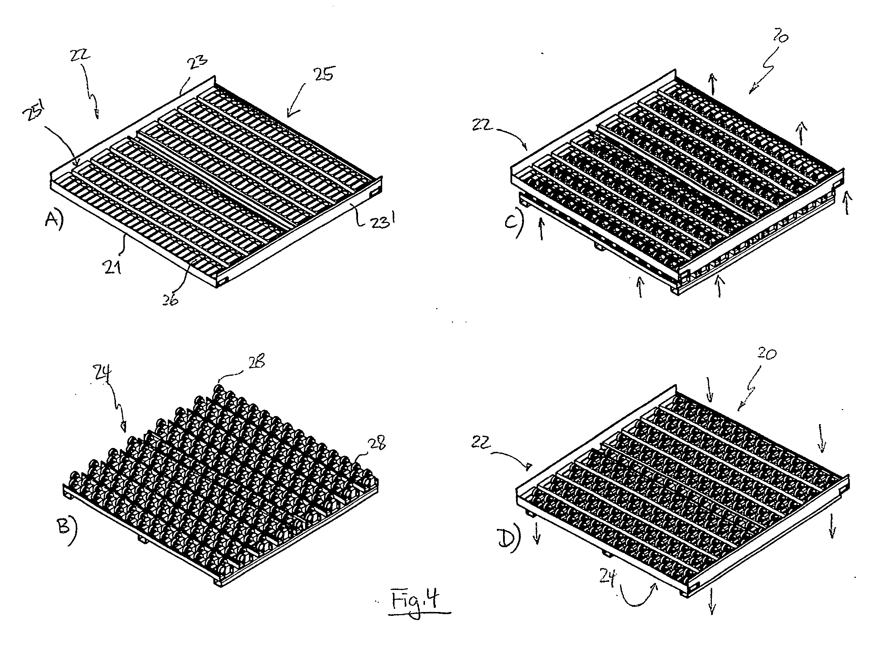

In den Fig. 4a - 4d sind Komponenten einer Entladevorrichtung 20 gemäß der vorliegenden Erfindung einzeln und gemeinsam in verschiedenen Zuständen in schematischen perspektivischen Ansichten gezeigt. Fig. 4a zeigt ein Tablar 22 in Alleinstellung, Fig. 4b zeigt ein Rollenfeld 24 in Alleinstellung, Fig. 4c zeigt das Tablar 22 in einem über dem Rollenfeld 24 angehoben Zustand und Fig. 4d zeigt einen abgesenkten Zustand.

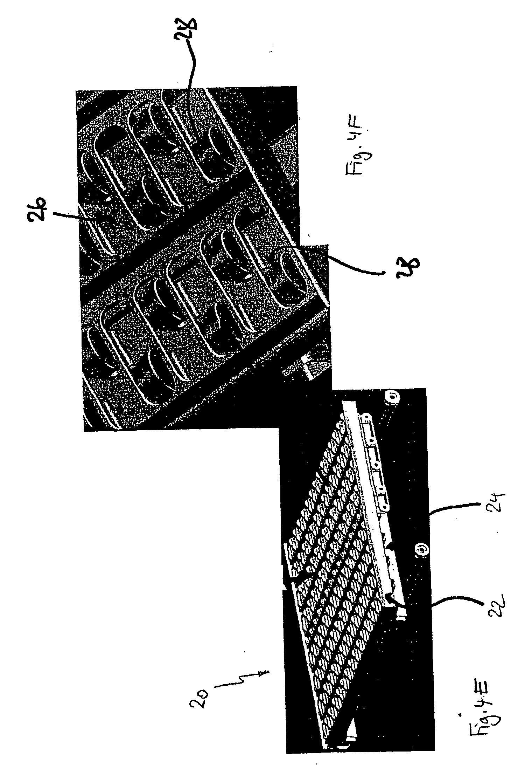

Die Entladevorrichtung 20 umfasst ein Rollenfeld 24. Das Rollenfeld 24 besteht aus einer Vielzahl von Rollen 28, die in der Detailansicht der Fig. 4b und 4f deutlich zu erkennen sind.

In der Fig. 4a ist ferner ein Tablar 22 zu erkennen. Das Tablar 22 weist eine Vielzahl von Löchern 26 auf, deren Anzahl zumindest einer Anzahl von Rollen 28 des Rollenfelds 24 entspricht (vgl. Fig. 4c bzw. 4f). Das Tablar umfasst vorzugsweise einen Rahmen 21. Der Rahmen 21 kann zwei sich gegenüberliegende Seitenwände 23, 23' aufweisen, die sich quer zu einem trapezförmigen Profil eines ein- oder mehrteiligen Einlegeblechs 25, 25' erstreckt. Im Beispiel der Fig. 4 ist exemplarisch ein zweiteiliges Einlegeblech 25, 25' dargestellt. Der Rahmen 21 weist deshalb vorzugsweise 3 Längsstreben zwischen den Seitenwänden 23, 23' auf, von den zwei Längsstreben die seitlichen Längsränder des Tablars 22 definieren und eine dritte (nicht dargestellte) Längsstrebe mittig zwischen den äußeren Streben angeordnet ist, um das Tablar 22 verwindungssteif zu machen.

Das trapezförmige Profil der Einlegebleche 25, 25' erhöht die zulässige Gesamttragkraft des Tablars 22 im Vergleich zu einem Tablar mit ebenen Einlegeblechen.

Ergänzend zu den Rollen 28 des Rollenfelds 24 können Hubgabeln (nicht dargestellt) oder umlaufende Hubriemen (nicht dargestellt) eingesetzt werden. Die Hubgabeln bzw. Hubriemen erstrecken sich dann in Längsrichtung des Tablars. Sie werden in die Täler des trapezförmigen Einlegeblechs, in Längsrichtung, eingefahren bzw. das Tablar wird dementsprechend in sie hinein gefahren. In diesem Fall verzichtet man auf die Seitenwände 23, 23', die normalerweise ein Abrutschen von Artikeleinheiten von dem Tablar verhindern. Die Hubgabeln und/oder Hubriemen werden anschließend angehoben und schwere Verpackungseinheiten können abgefördert werden. Dazu sind vorzugsweise weitere Fördermittel an den Hubgabeln bzw. -riemen vorgesehen.

Die Fig. 4e und 4e zeigen einen Zustand, bei dem das Rollenfeld 24 entweder angehoben wurde oder das Tablar 22 abgesenkt wurde, so dass die Rollen 28 durch die Öffnungen 26 greifen. Das Absenken bzw. Anheben erfolgt in einer Richtung im Wesentlichen senkrecht zu einer Ladefläche des Tablars 22. Die Ladefläche des Tablars 22 ist im Wesentlichen parallel zu einer Fläche des Rollenfeldes 24, auf der die Rollen 28 angeordnet bzw. befestigt sind.

Die Entladevorrichtung 20 umfasst ferner einen Hubmechanismus, mit dem die Relativbewegung zwischen dem Tablar 22 und dem Rollenfeld 24 beim Absenken oder Anheben bewirkt wird.

Es versteht sich, dass das Rollenfeld 24 aus den Öffnungen 26 herausgefahren werden muss, um das Tablar 22 für einen weiteren Entladevorgang auszutauschen. Dies wird nachfolgend noch detaillierter beschrieben werden.

Als Rollen 28 können Flachmotorrollen verwendet werden, wie sie beispielsweise von der Firma MAXONMOTOR angeboten werden. Diese Motoren sind bürstenlos und werden mit einem Rollendurchmesser von 6 bis 90 mm geliefert. Jede Rolle enthält dabei ihren eigenen Antriebsmotor. Diese Eigenschaft ist von besonderem Vorteil, wenn jede einzelne Rolle 28 auch einzelangesteuert werden soll. Ein externes Antriebsaggregat ist nicht erforderlich, so dass die Entladevorrichtung der vorliegenden Erfindung verhältnismäßig kurz baut. So ist z.B. eine Integration in ein Lastaufnahmemittel, wie es z.B. in den Vertikalliften 128 eingesetzt wird, problemlos möglich.

Ferner ist in Fig. 4 gut zu erkennen, dass es eine erste Gruppe von Rollen 28 gibt, die am linken Rand der Öffnungen 26 angeordnet sind. Diese Anordnung ist matrixförmig bzw. gitterförmig. Eine zweite Gruppe von Rollen 28 ist am rechten Rand von benachbarten Öffnungen 26 angeordnet. Diese zweite Gruppe ist ebenfalls matrixförmig angeordnet. Die beiden Matrizen der ersten und zweiten Gruppe sind gegeneinander versetzt. Durch diese Maßnahme wird gewährleistet, dass Verpackungseinheiten mit sehr kleiner Grundfläche sicher vom Tablar 22 transportiert werden können.

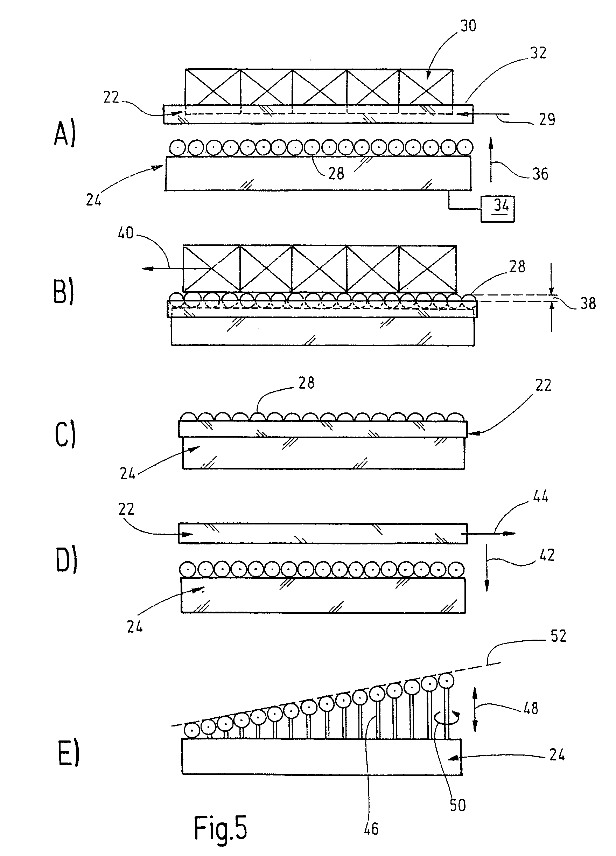

Unter Bezugnahme auf Fig. 5a bis 5d ist ein solcher Abtransport von Verpackungseinheiten 30 exemplarisch dargestellt.

In Fig. 5a ist ein Tablar 22 in einer Seitenansicht gezeigt, welches mit einer Vielzahl von Verpackungseinheiten 30 beladen ist. Die Verpackungseinheiten 30 sind gegenüber einem umlaufenden Rand 32 des Tablars 22 abgesenkt. Auf diese Weise wird verhindert, dass die Verpackungseinheiten 30 vom Tablar 22 rutschen können, insbesondere während einer Anlieferung des Tablars 32, wie es durch einen Pfeil 29 angedeutet ist.

Ferner ist in Fig. 5a das Rollenfeld 24 mit einer Vielzahl von Rollen 28 gezeigt. Bei dieser Ausführungsform der Erfindung ist das Rollenfeld 24 mit einem Hubmechanismus 34 verbunden, so dass das Rollenfeld 24 in Richtung des Tablars 22 angehoben wird, wie es durch einen Pfeil 36 angedeutet ist.

In Fig. 5b ist das Rollenfeld 24 in einem angehobenen Zustand gezeigt. Die Rollen 28 sind durch die Löcher 26 (vgl. Fig. 4b) hindurchgetreten und heben die Verpackungseinheiten 30 so hoch an, dass sie über den Rand 32 des Tablars 22 vorstehen. Dies ist schematisch durch einen Abstand 38 in Fig. 5b angedeutet. Der Hub des Hubmechanismus 34 ist dementsprechend ausgelegt.

Die Verpackungseinheiten 30 können nun in Richtung 40 abtransportiert werden.

Fig. 5c zeigt einen Zustand, bei dem die Verpackungseinheiten 30 abtransportiert sind. Das Rollenfeld 24 bzw. die Rollen 28 schauen noch aus den Löchern in der Ladefläche des Tablars 22 vor.

In Fig. 5d ist das Rollenfeld 24 wieder abgesenkt worden, wie es durch einen Pfeil 42 angedeutet ist. Das Tablar 22 kann in Richtung 44 abtransportiert werden und durch ein neues, beladenes Tablar ausgetauscht werden.

Es versteht sich, dass alternativ zum Anheben und Absenken des Rollenfeldes 24 das Tablar 22 auch abgesenkt und angehoben werden könnte, um die Verpackungseinheiten 30 zu deren Abförderung anzuheben.

In Fig. 5e ist eine weitere Ausführungsform der Entladevorrichtung in einer Seitenansicht ähnlich der Fig. 5a bis 5d gezeigt. Das Rollenfeld der Fig. 5e unterscheidet sich von dem Rollenfeld 24 der Fig. 4a bis 4d darin, dass die Rollen jeweils mit einer eigenen Hubvorrichtung 46 verbunden sind, um jede Rolle unterschiedlich hoch entlang einer Hubrichtung 48 anheben und absenken zu können. Die Hubrichtung 48 erstreckt sich vorzugsweise senkrecht zur Ladefläche des Tablars, wenn das Tablar über das Rollenfeld verfahren wurde, wie es beispielsweise in Fig. 5a gezeigt ist.

Da jede einzelne Rolle 28 in der Fig. 5e unterschiedlich hoch ausgefahren werden kann, kann eine schräge Ebene 52 gebildet werden, die in der Fig. 5e nach links unten geneigt ist. Geht man davon aus, dass Verpackungseinheiten nach links abgefördert werden sollen, wie es beispielsweise in Fig. 5b angedeutet ist, so unterstützt die schräge Ebene 52 den Abtransport aufgrund der auftretenden Hangabtriebskraft.

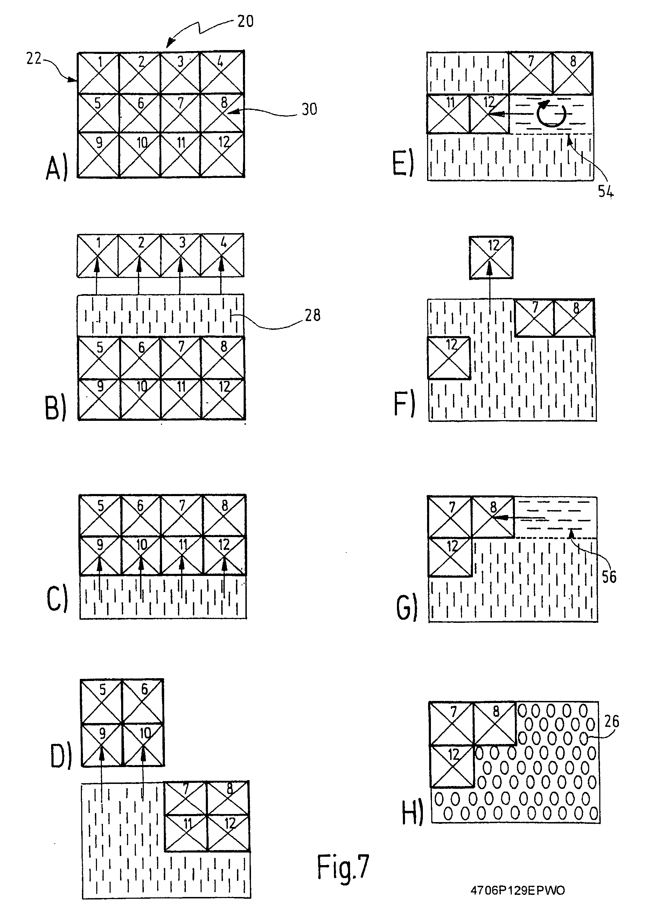

Ferner können die Rollen - unabhängig davon, ob sie zusätzlich einzeln gehoben und gesenkt werden können - auch gedreht werden, wie es durch einen Pfeil 50 angedeutet ist. Diese Drehung wird ausführlicher im Zusammenhang der Fig. 7e erläutert werden. Der Drehwinkel ist dabei beliebig.

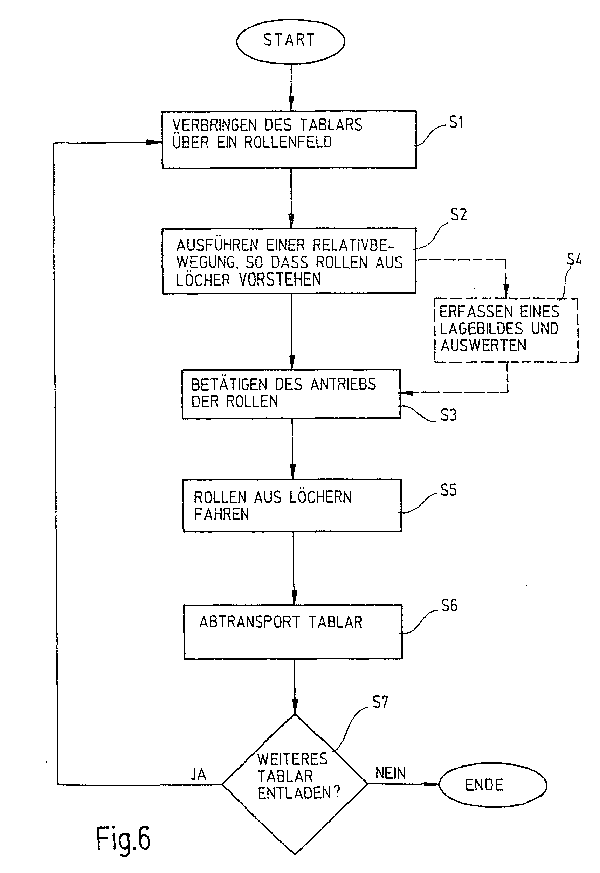

In Fig. 6 ist ein Flussdiagramm exemplarisch dargestellt, das die Schritte des erfindungsgemäßen Entladevorgangs wiedergibt.

In einem ersten Schritt S1 wird das Tablar über das Rollenfeld verbracht. In einem zweiten Schritt S2 wird entweder das Tablar derart abgesenkt oder das Rollenfeld derart angehoben, dass die Rollen aus den Löchern des Tablars vorstehen. Anschließend werden in einem Schritt S3 solche Rollen des Rollenfelds betätigt, die benötigt werden, um zu bewirken, dass eine bestimmte Verpackungseinheit entlang eines Abförderweges vom Tablar abgefördert wird. Alternativ kann in einem Schritt S4 zuvor eine Lage von auf dem Tablar befindlichen Verpackungseinheiten erfasst und ausgewertet werden, um Verschiebungen der Verpackungseinheiten auf dem Tablar zu berücksichtigen.

Nachdem z.B. alle gewünschten Verpackungseinheiten vom Tablar abgefördert wurden, werden in einem Schritt S5 die Rollen wieder aus den Löchern gefahren, indem z.B. das Tablar angehoben oder das Rollenfeld abgesenkt wird. Teilweise entladene Tablare können in das Tablarlager für einen erneuten Abruf zurück verbracht werden

In einem Schritt S6 wird das leere oder teilweise entladene Tablar abtransportiert. Anschließend wird in einem Schritt S7 gefragt, ob ein weiteres Tablar entladen werden muss. Wenn ein weiteres Tablar entladen werden muss, kehrt man zum Schritt S1 zurück. Muss kein weiteres Tablar entladen werden, so endet das Verfahren.

In den Fig. 7a bis 7h ist ein Entladevorgang schematisch in einer Draufsicht auf eine Entladevorrichtung gemäß der vorliegenden Erfindung gezeigt.

In Fig. 7a ist ein Tablar 22 mit insgesamt zwölf Verpackungseinheiten 30 gezeigt, die mit den ziffern 1 bis 12 nummeriert sind. Es versteht sich, dass mehr oder weniger Verpackungseinheiten auf dem Tablar 22 vorhanden sein könnten. In der Regel ist jedoch eine vollständige, artikelreine Lage von Verpackungseinheiten einer Europalette auf dem Tablar 22 angeordnet.

In Fig. 7a ist der Zustand gezeigt, bei dem das Tablar 22 bereits über das Rollenfeld gefahren wurde (vgl. Fig. 5a). Auch wurde das Tablar bereits abgesenkt bzw. das Rollenfeld angehoben (vgl. Fig. 5b).

Nun kann es sein, dass lediglich die Verpackungseinheiten 1 bis 4 zur Abarbeitung eines Kommissionierauftrags benötigt werden. In diesem Fall werden auch lediglich die Verpackungseinheiten 1 bis 4 abgefördert, wie es in Fig. 7b gezeigt ist. Dazu werden die Rollen 28 angesteuert, die sich in der Fig. 7a unterhalb der Verpackungseinheiten 1 bis 4 befinden. Es versteht sich, dass auch andere Verpackungseinheiten wie z.B. nur Nr. 1, Nr. 1 und 2 oder Nr. 1 und 4 entladen werden können.

Anschließend können die restlichen Verpackungseinheiten 5 bis 12 umsortiert oder verschoben werden, wie es exemplarisch in Fig. 7c gezeigt ist. Das Tablar könnte aber auch ins Tablarlager zurück transportiert werden. Vorzugsweise werden die restlichen, auf dem Tablar befindlichen Verpackungseinheiten jedoch an den bevorzugten Entladerand verbracht, der hier in der Fig. 7 durch den oberen Rand des Tablars repräsentiert wird. Dann können diese restlichen Verpackungseinheiten beim nächsten Entladevorgang - auf Grund des kürzeren Wegs - schneller entladen werden.

Es versteht sich, dass die Umsortierung nicht zwingend erforderlich ist. Ferner könnte das Tablar auch ohne Umsortierung wieder mit den restlichen Verpackungseinheiten 5 bis 12 in das Tablarlager verbracht werden, bevor es erneut zur Abarbeitung eines Kommissionierauftrags benötigt wird, wie es im Zusammenhang mit der Fig. 7d erläutert wird.

In Fig. 7d ist das Tablar z.B. erneut zur Abförderung angefordert worden, oder es befindet sich noch immer über dem Rollenfeld, da es nicht zwischengelagert wurde.

In der Fig. 7d ist eine Situation dargestellt, wenn die Verpackungseinheiten 5, 6, 9 und 10 zur Abarbeitung eines weiteren Kommissionierauftrags benötigt werden. In diesem Falle werden die Rollen 28 betätigt bzw. angetrieben, die sich in Fig. 7c unterhalb der Verpackungseinheiten 5, 6, 9 und 10 befinden.

Nun könnte es sein, dass beim nächsten Aufruf des Tablars die Packungseinheit 12 zur Abarbeitung eines weiteren Kommissionierauftrags benötigt wird. Dies ist in den Fig. 7e und 7f verdeutlicht, wobei aber hier ausnahmsweise zusätzlich vorausgesetzt wird, dass die Verpackungseinheiten 1 bis 12 nicht sortenrein vorgelegen haben, da anderenfalls in Abruf der Verpackungseinheit 12 sinnlos wäre. In der Regel liegen die Verpackungseinheiten 1 bis 12 jedoch sortenrein vor.

Wie in Fig. 7e zu erkennen, wurden - im Vergleich zur Fig. 7d - die Rollen unterhalb der Verpackungseinheiten 1 bis 12 sowie der links davon liegenden Rollen um 90° gedreht (vgl. auch Pfeil 50 in Fig. 5e). Die Verpackungseinheiten 11 und 12 können so in der Fig. 7e nach links transportiert werden, so dass die Verpackungseinheiten 7 und 8 der Verpackungseinheit 12 bei einer Abförderung nicht mehr im Wege stehen. Die Verpackungseinheit 12 kann dann abgefördert werden, wie es in Fig. 7f dargestellt ist.

Bei einer bevorzugten Ausführungsform (nicht dargestellt) sind die Rollen von einigen Reihen bzw. Spalten leicht gegenüber der Vielzahl der restlichen Rollen verdreht. Diese Schrägstellung ist derart gewählt, dass auf ihnen ruhende Verpackungseinheiten beim Entladen leicht voneinander getrennt werden. Dies ist insbesondere dann von Vorteil, wenn die Verpackungseinheiten auf dem Tablar relativ dicht und eng gepackt sind. Auf diese Weise kann neben einem Entladen auch gleichzeitig eine Vereinzelung durchgeführt werden. Solche Rollen können von Anfang an schräg stehen oder gezielt schräg gestellt werden.

Es versteht sich, dass einige oder alle Rollen 28 drehbar ausgebildet sein können. In Fig. 7g wurden im Vergleich zu Fig. 7f die Rollen unterhalb der Verpackungseinheiten 7 und 8 um 90° gedreht, um die Verpackungseinheiten 7 und 8 nach links zu fördern. Andere Drehwinkel sind möglich.

Nach Abschluss eines Abfördervorgangs werden entweder die Rollen abgesenkt oder das Tablar angehoben. Dieser Zustand ist in Fig. 7h dargestellt, in der man die Löcher 26 des Tablars 22 erkennt.

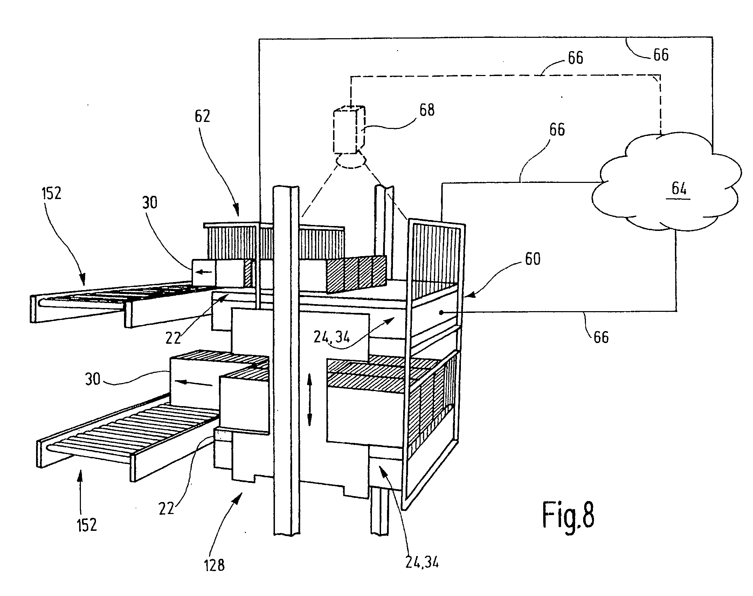

In Fig. 8 ist ein konkretes Anwendungsbeispiel aufgezeigt.

Fig. 8 zeigt einen vertikalen Lift 128, wie er beispielsweise im Tablarlager 110 der Fig. 1 verwendet wird. Der Vertikallift 128 verfügt hier über zwei Aufnahmemittel, die übereinander angeordnet sind, um jeweils ein Tablar aufnehmen zu können. Im Beispiel der Fig. 8 wird davon ausgegangen, dass das Lastaufnahmemittel Tablare aus einem Regal (nicht dargestellt) holt, welches rechts vom Lift 128 angeordnet ist. Die Verpackungseinheiten 30 sollen nach links auf eine Fördertechnik 152 abgegeben werden.

Das Rollenfeld 24 und der Hubmechanismus 34 sind hier jeweils in das Lastaufnahmemittel des Lifts 128 integriert.

In Fig. 8 ist eine Situation dargestellt, bei der die Lastaufnahmemittel des Lifts 128 jeweils mit einem Tablar 22 beladen sind. Das Rollenfeld 24 ist angehoben, obwohl die Rollen hier nicht expliziert dargestellt sind. Wie man im oberen Teil des Lifts erkennt, wurde bereits die erste Reihe von Verpackungseinheiten 30 an die obere Fördertechnik 152 abgegeben. Die restlichen Verpackungseinheiten sind bereits in Richtung der Fördertechnik 152 nachgerückt.

Ferner verfügt die Entladevorrichtung hier über ein Lichtgitter 60, welches bei einem Transfer der Tablare 22 vom Regal auf das Lastaufnahmemittel des Lifts 128 die relative Lage der Verpackungseinheiten 30 erfasst. Ein Lichtgitter kann jedoch auch oberhalb der Ladefläche des Tablars angebracht sein. Wenn sich das Tablar auf dem Lastaufnahmemittel des Vertikallifts befindet, wie es durch eine Vorrichtung 62 angedeutet ist, können so Bilder von der Beladungsdichte im Lift erzeugt werden. Alternativ und ergänzend könnte auch eine Video- oder Fotokamera 68 eingesetzt werden.

Diese Lageerfassungseinrichtungen können auch verwendet werden, um zu kontrollieren, ob das "richtige" Tablar über das Rollenfeld verfahren wurde. Es kann kontrolliert werden, ob die richtigen Verpackungseinheiten auf dem Tablar geladen sind. Ein Bild der Lage der Verpackungseinheiten relativ zum Tablar kann erzuegt werden. Umgekehrt kann beim Ausfahren eine Kontrolle und Erfassung des Lagenbilds (Lage, Menge, usw.) durchgeführt werden. Auf diese Weise könnte ein Rücklagerungprozess auch angehalten werden, wenn z.B. eine Verpackungseinheit über den Tablarrand hinausragt. So lassen sich Störungen, Staus und Kollisionen während des (Rück-)Transports der Tablare vermeiden.

Es versteht sich, dass die Elemente 60, 62 und 68 einzeln oder in beliebiger Kombination vorgesehen werden können. Alle sind mit einer Steuereinrichtung 64, wie z.B. in einem Lagerverwaltungsrechner, über Leitungen 66 verbunden. Es versteht sich, dass die Leitungen 66 auch drahtlos implementiert sein können. Die Steuereinrichtung 64 wertet dann die erfassten Lagepositionen der Verpackungseinheiten auf den Tablaren aus und bestimmt so die Rollen, die in den Rollenfeldern 24 angesteuert werden müssen, um bestimmte Verpackungseinheiten abzufördern.

Außerdem könnten die Verpackungseinheiten mit sogenannten RFID-Transpondern (RFID = Radio Frequency Identification) ausgestattet sein. Es versteht sich, dass dann zusätzlich oder im Austausch zu den Elementen 62 bis 68 geeignete Lesegeräte mit einer ausreichenden Ortsauflösung eingesetzt werden können. Die Verwendung von RFID-Transpondern an den Verpackungseinheiten hat den Vorteil, dass Verpackungseinheiten-spezifisch zusätzliche Informationen abgespeichert werden können, wie z.B. Verfallsdatum, Chargennummer, etc..

Weiterhin können alle oder zumindest einige der Rollen auch durch externe Antriebe zusätzlich oder permanent angetrieben werden. Dies ist bei besonderes schweren Verpackungseinheiten notwendig, wenn die Leistung von selbstantreibenden Rollen, wie z.B. Flachmotorrollen nicht mehr ausreicht, um die schwere Verpackungseinheit abzufördern. Auch können einige Rollenreihen durch herkömmlich angetriebene Rollen ersetzt werden, die dann bei Bedarf über eine Kupplung zugeschaltet werden können.

Gemäß einer weiteren (nicht dargestellten) Ausführungsform wird als externer Antrieb z.B. eine angetriebene Motorrolle verwendet, wie sie in der deutschen Patentanmeldung DE 103 36 304 A beschrieben ist. Diese Motorrolle wird z.B. innerhalb einer Reihe von Rollen eines Rollenfeldes angeordnet. Die Motorrolle ist dann koaxial zu den Rollen des Rollenfelds ausgerichtet. Auf dem Mantel der Motorrolle werden im Bereich der Rollen des Rollenfeldes mit Kupplungen versehene Gleitlager vorgesehen, mit deren Hilfe einzelne Rollen des Rollenfeldes mittels der angetriebenen Motorrolle angetrieben werden. Im Normalzustand sind die Rollen sogenannte Losrollen, die unangetrieben frei drehen können. Alternativ können auch alle Rollen des Rollenfeldes auf diese Weise angetrieben werden, wodurch man die relativ teureren Flachmotorrollen einsparen kann. So angetriebene Rollenfeldrollen können dann mit Hilfe der Kupplung gezielt, auch einzeln, angesteuert werden.

## Patentansprüche

1. Vorrichtung (20) zum Entladen eines Ladehilfsmittels (22) in einer Kommissionieranlage, insbesondere eines Tablars (22), das mit einer Vielzahl von Verpackungseinheiten (30), vorzugsweise mit einer Palettenlage (142) von Verpackungseinheiten (30), beladbar ist, **gekennzeichnet durch**
ein Rollenfeld (24), das eine Vielzahl von angetriebenen Rollen (28) umfasst und das eine Größe aufweist, die im Wesentlichen einer Größe einer Ladefläche des Ladehilfsmittels (22) entspricht; und
einen Hubmechanismus (34), der das Rollenfeld (24) derart anheben oder das Ladehilfsmittel (22) derart absenken kann, dass die Rollen (28) **durch** Löcher (26) in der Ladefläche des Ladehilfsmittels (22) treten, um eine Verpackungseinheit (30) **durch** Antreiben der Rollen (28) von der Ladefläche zu fördern,
wobei jede einzelne Rolle (28) des Rollenfeldes (24) unabhängig von den restlichen Rollen (28) des Rollenfeldes (24) ansteuerbar ist.

2. Vorrichtung nach Anspruch 1, **dadurch gekennzeichnet, dass** ferner eine Steuereinrichtung (64) vorgesehen ist, um bestimmte Rollen (28) des Rollenfeldes (24) gezielt anzusteuern.

3. Vorrichtung nach Anspruch 2, **dadurch gekennzeichnet, dass** jede Rolle wahlweise ansteuerbar ist, um eine vorbestimmte Verpackungseinheit der Verpackungseinheiten von dem Ladehilfsmittel zu entladen.

4. Vorrichtung nach Anspruch 2, **dadurch gekennzeichnet, dass** das Rollenfeld (24) in eine Vielzahl von Segmenten (54, 56) unterteilbar ist, und wobei die Segmente (54, 56) unabhängig voneinander ansteuerbar sind.

5. Vorrichtung nach einem der vorhergehenden Ansprüche, **dadurch gekennzeichnet, dass** die Rollen (28) des Rollenfeldes (24) matrixförmig angeordnet sind.

6. Vorrichtung nach Anspruch 5, **dadurch gekennzeichnet, dass** das Rollenfeld (24) in zwei Gruppen unterteilt ist, wobei die Rollen jeder Gruppe matrixförmig angeordnet sind und die Matrizen der Gruppen gegeneinander versetzt sind.

7. Vorrichtung nach einem der vorhergehenden Ansprüche, **dadurch gekennzeichnet, dass** jede Rolle (28) eine Flachmotorrolle ist, die jeweils einen Rollenkörper mit einem integrierten Antriebsmotor umfasst.

8. Vorrichtung nach einem der vorhergehenden Ansprüche, **dadurch gekennzeichnet, dass** die Vorrichtung ferner eine Einrichtung (60, 62) zum Erfassen einer geometrischen Anordnung von auf der Ladefläche befindlichen Verpackungseinheiten (30) umfasst.

9. Lagermaschine für eine Kommissionieranlage (100) zum Kommissionieren von Verpackungseinheiten (30) gemäß einem Kundenauftrag mit zumindest einem Lastaufnahmemittel, wobei jedes Lastaufnahmemittel die Vorrichtung (20) zum Entladen nach einem der Ansprüche 1 bis 8 umfasst.

10. Verfahren zum Entladen eines Ladehilfsmittels (30) in einer Kommissionieranlage, insbesondere eines Tablars (22), das mit einer Vielzahl von Verpackungseinheiten (30), vorzugsweise mit einer Palettenlage (142) von Verpackungseinheiten (30), beladen ist, **gekennzeichnet durch** die folgenden Schritten:
Verbringen (51) des Ladehilfsmittels (22) über ein Rollenfeld (24), das eine Vielzahl von angetrieben Rollen (28) umfasst, wobei jede Rolle des Rollenfeldes (24) unabhängig von den restlichen Rollen (28) des Rollenfeldes (24) ansteuerbar ist;
Betätigen eines Hubmechanismus (34), der das Rollenfeld (24) derart anhebt oder der das Ladehilfsmittel (22) derart absenkt, dass die Rollen (28) **durch** Löcher (26) in einer Ladefläche des Ladehilfsmittels (22) treten, so dass eine vorbestimmte Verpackungseinheit (30), die auf der Ladefläche angeordnet ist, **durch** Antreiben der Rollen (28) von der Ladefläche gefördert werden kann; und
Antreiben, insbesondere wahlweise, einzelner Rollen (28), um die vorbestimmte Verpackungseinheit (30) der Verpackungseinheiten von der Ladefläche zu fördern.

11. Verfahren nach Anspruch 10, **dadurch gekennzeichnet, dass** lediglich solche Rollen (28) des Rollenfelds (24) angetrieben werden, die unterhalb der zu fördernden Verpackungseinheit (30) und entlang eines Weges angeordnet sind, der während eines Abförderns der Verpackungseinheit (30) von der Ladefläche durch die Verpackungseinheit (30) zurückgelegt wird.

12. Verfahren nach Anspruch 10 oder 11, **dadurch gekennzeichnet, dass** ferner eine geometrische Anordnung von Verpackungseinheiten (30), die sich auf der Ladefläche befinden, erfasst und ausgewertet wird, um zu bestimmen, welche der Rollen (28) angetrieben werden müssen, um die Verpackungseinheit (30) von der Ladefläche zu fördern.

13. Verfahren nach einem der Ansprüche 10 bis 12, **dadurch gekennzeichnet, dass** nur solche Rollen (28) angehoben werden, die zum Abfördern der Verpackungseinheit (30) benötigt werden.

14. Verfahren nach einem der Ansprüche 10 bis 13, **dadurch gekennzeichnet, dass** jede Rolle (28) des Rollenfelds (24) um eine Achse senkrecht zur Ladefläche gedreht wird, um die Verpackungseinheit in eine andere Richtung zu fördern.

15. Verfahren nach einem der Ansprüche 10 bis 14, **dadurch gekennzeichnet, dass** die Rollen des Rollenfeldes unterschiedlich hoch angehoben werden, um eine schräge Ebene zu definieren, die vorzugsweise in eine Richtung geneigt ist, in die die Verpackungseinheit abgefördert werden soll.

## Claims

1. An apparatus (20) for unloading a load support (22), particularly a tray (22), in an order-picking system wherein the load support can be loaded with a plurality of packing units (30), preferably with a pallet layer (142) of the packing units (30), **characterized by**:
a roller array (24) comprising a plurality of driven rollers (28), and having a size which substantially corresponds to a size of a loading area of the load support (22); and
a lifting mechanism (34) which can lift the roller array (24) or lower the load support (22) such that the rollers (28) engage through holes (26) in the loading area of the load support (22) in order to remove from the loading area one packing unit (30) by driving the rollers (28),
wherein each individual one of the rollers (28) of the roller array (24) is controllable independently of the other rollers (28) of the roller array (24).

2. The apparatus of claim 1, further **characterized in that** a control device (64) is provided for controlling specific ones of the rollers (28) of the roller array (24) in a specific manner.

3. The apparatus of claim 2, **characterized in that** each of the rollers is selectively controllable for unloading a specific packing unit of the packing units from the load support.

4. The apparatus of claim 2, **characterized in that** the roller array (24) can be divided into a plurality of segments (54, 56), and wherein the segments (54, 56) are controllable independently of each other.

5. The apparatus of any of the preceding claims, **characterized in that** the rollers (28) of the roller array (24) are arranged in shape of a matrix.

6. The apparatus of claim 5, **characterized in that** the roller array (24) is divided into two groups, wherein the rollers of each group are arranged matrix-like, and the matrices of the groups are displaced mutually.

7. The apparatus of any of the preceding claims, **characterized in that** each of the rollers (28) is a flat motor roller respectively comprising a roller body having an integrated drive motor.

8. The apparatus of any of the preceding claims, **characterized in** further comprising a device (60, 62) for detecting a geometrical arrangement of the packing units (30) located on the loading area.

9. A storage machine dedicated to an order-picking system (100) for order picking packing units (30) in accordance with a picking order using at least one load suspension device, wherein each load suspension device comprises the unloading apparatus (20) in accordance with one of the claims 1 to 8.

10. A method for unloading a load support (30), particularly a tray (22), within an order-picking system wherein the load support is loaded with a plurality of packing units (30), preferably with one pallet layer (142) of the packing units (30), **characterized by** the following steps:
transporting (51) the load support (22) above a roller array (24) comprising a plurality of driven rollers (28), wherein each of the rollers of the roller array (24) is controllable independently of the other rollers (28) of the roller array (24);
operating a lifting mechanism (34) lifting the roller array (24) or lowering the load support (22) such that the rollers (28) engage through holes (26) in a loading area of the load support (22) so that a specified packing unit (30), which is arranged on the loading area, can be removed from the loading area by driving the rollers (28); and
driving, particularly in a selective manner, individual ones of the rollers (28) for removing the specified packing unit (30) of the packing units from the loading area.

11. The method of claim 15, **characterized by** merely driving such rollers (28) of the roller array (24), which are arranged beneath the packing unit (30) to be conveyed and along a path, which is passed by the packing unit (30) during removal of the packing unit (30) from the loading area.

12. The method of claim 10 or 11, further **characterized by** detecting and evaluating a geometrical arrangement of packing units (30) located on the loading area for determining which of the rollers (28) has to be driven, in order to convey the packing unit (30) from the loading area.

13. The method of any of the claims 10 to 12, **characterized by** lifting only such rollers (28), which are needed for removing the packing unit (30).

14. The method of any of the claims 10 to 13, **characterized by** rotating each of the rollers (28) of the roller array (24) about an axis oriented perpendicular to the loading area, in order to convey the packing unit into a different direction.

15. The method of any of the claims 10 to 14, **characterized in that** the rollers of the roller array are lifted differently high, in order to define an oblique plane which is preferably inclined towards a direction into which the packing unit is to be transported away.

## Revendications

1. Dispositif (20) pour le déchargement d'un moyen d'aide au stockage (22) dans une installation de préparation des commandes, en particulier d'un rayonnage (22), qui peut être chargé avec une pluralité d'unités d'emballage (30), de préférence avec une couche de palettes (142) d'unités d'emballage (30), **caractérisé par**
un champ de rouleaux (24), qui comprend une pluralité de rouleaux entraînés (28) et qui présente une taille correspondant essentiellement à une taille d'une surface de stockage du moyen d'aide au stockage (22) ; et
un mécanisme de levage (34), qui peut soulever le champ de rouleaux (24) ou abaisser le moyen d'aide au stockage (22) de telle sorte que les rouleaux (28) entrent à travers des trous (26) dans la surface de stockage du moyen d'aide au stockage (22), afm de transporter une unité d'emballage (30) depuis la surface de stockage par entraînement des rouleaux (28),
chaque rouleau individuel (28) du champ de rouleaux (24) pouvant être commandé indépendamment des autres rouleaux (28) du champ de rouleaux (24).

2. Dispositif selon la revendication 1, **caractérisé en ce qu'**en outre un dispositif de commande (64) est prévu pour commander de manière spécifique des rouleaux particuliers (28) du champ de rouleaux (24).

3. Dispositif selon la revendication 2, **caractérisé en ce que** chaque rouleau peut être commandé de manière sélective, afin de décharger du moyen d'aide au stockage une unité d'emballage prédéterminée parmi les unités d'emballage.

4. Dispositif selon la revendication 2, **caractérisé en ce que** le champ de rouleaux (24) peut être divisé en une pluralité de segments (54, 56), et les segments (54, 56) peuvent être commandés indépendamment les uns des autres.

5. Dispositif selon l'une quelconque des revendications précédentes, **caractérisé en ce que** les rouleaux (28) du champ de rouleaux (24) sont disposés en forme de matrice.

6. Dispositif selon la revendication 5, **caractérisé en ce que** le champ de rouleaux (24) est divisé en deux groupes, les rouleaux de chaque groupe étant disposés en forme de matrice et les matrices des groupes étant décalées les unes par rapport aux autres.

7. Dispositif selon l'une quelconque des revendications précédentes, **caractérisé en ce que** chaque rouleau (28) est un rouleau à moteur plat, qui comprend à chaque fois un corps de rouleau avec un moteur d'entraînement intégré.

8. Dispositif selon l'une quelconque des revendications précédentes, **caractérisé en ce que** le dispositif comprend en outre un dispositif (60, 62) pour détecter un agencement géométrique d'unités d'emballage (30) se trouvant sur la surface de stockage.

9. Machine de stockage pour une installation de préparation des commandes (100) pour la préparation de commandes d'unités d'emballage (30) selon un ordre d'un client, comprenant au moins un moyen de réception de charge, chaque moyen de réception de charge comprenant le dispositif (20) pour le déchargement selon l'une quelconque des revendications 1 à 8.

10. Procédé pour le déchargement d'un moyen d'aide au stockage (22) dans une installation de préparation des commandes, en particulier d'un rayonnage (22), qui est chargé avec une pluralité d'unités d'emballage (30), de préférence avec une couche de palettes (142) d'unités d'emballage (30), **caractérisé par** les étapes suivantes :
déplacement (51) du moyen d'aide au stockage (22) sur un champ de rouleaux (24) qui comprend une pluralité de rouleaux entraînés (28), chaque rouleau du champ de rouleaux (24) pouvant être commandé indépendamment des rouleaux restants (28) du champ de rouleaux (24) ;
actionnement d'un mécanisme de levage (34) qui soulève le champ de rouleaux (24) ou qui abaisse le moyen d'aide au stockage (22) de telle sorte que les rouleaux (28) entrent à travers des trous (26) dans une surface de stockage du moyen d'aide au stockage (22), de sorte qu'une unité d'emballage prédéterminée (30), qui est disposée sur la surface de stockage, puisse être transportée par entraînement des rouleaux (28) depuis la surface de stockage ; et
entraînement, notamment de manière sélective, de rouleaux individuels (28), afin de transporter l'unité d'emballage prédéterminée (30) parmi les unités d'emballage depuis la surface de stockage.

11. Procédé selon la revendication 10, **caractérisé en ce que** sont seulement entraînés les rouleaux (28) du champ de rouleaux (24) qui sont disposés sous l'unité d'emballage (30) à transporter et qui sont disposés le long d'une trajectoire qui est parcourue par l'unité d'emballage (30) pendant une évacuation de l'unité d'emballage (30) depuis la surface de stockage.

12. Procédé selon la revendication 10 ou 11, **caractérisé en ce qu'**en outre un agencement géométrique d'unités d'emballage (30), qui se trouvent sur la surface de stockage, est détecté et analysé, afin de déterminer lesquels des rouleaux (28) doivent être entraînés pour transporter l'unité d'emballage (30) depuis la surface de stockage.

13. Procédé selon l'une quelconque des revendications 10 à 12, **caractérisé en ce que** sont seulement soulevés les rouleaux (28) qui sont nécessaires pour évacuer l'unité d'emballage (30).

14. Procédé selon l'une quelconque des revendications 10 à 13, **caractérisé en ce que** chaque rouleau (28) du champ de rouleaux (24) est tourné autour d'un axe perpendiculairement à la surface de stockage afin de transporter l'unité d'emballage dans une autre direction.

15. Procédé selon l'une quelconque des revendications 10 à 14, **caractérisé en ce que** les rouleaux du champ de rouleaux sont soulevés à des hauteurs différentes afin de définir un plan oblique qui est de préférence incliné dans une direction dans laquelle l'unité d'emballage doit être évacuée.
